# EUROPEAN PATENT APPLICATION

(11) **EP 4 804 083 A1**
(43) Date of publication of application: **09.09.2026**
(21) Application number: 25162096.9
(22) Date of filing: 06.03.2025
(51) Int. Cl.: G06N 3/08, G06N 7/01, G06Q 50/06, H02J 3/00

(54) **DYNAMIC SECURITY FORECASTING FOR POWER NETWORKS**

(71) Applicant: Hitachi Energy Ltd, 8050 Zürich (CH)
(72) Inventor: NUQUI, Reynaldo, Cary, North Carolina, 27513 (US); POLAND, Jan, 5415 Nussbaumen (CH); PAN, Jiuping, Raleigh, North Carolina, 27606 (US); BERGGREN, Bertil, 722 10 Västerås (SE); RIPAMONTI, Nicolo, 5430 Wettingen (CH); KRZYSIAK, Janina, 30126 Krakow (PL)
(74) Representative: Vossius & Partner Patentanwälte Rechtsanwälte mbB

(57) **Abstract**

A dynamic security assessment predicts the dynamic behavior of operating points of a power network, subject to operator-defined contingencies. Generally, dynamic security assessments still require human interaction. Disclosed embodiments use machine learning to determine the value of a security indicator within a numerical range, in which one end represents instability and the other end represents stability. Not only does this enable automated, real-time dynamic security assessments, but it also enables the calculation of a proximity of the power network to instability, a speed at which the power network is approaching instability, and other insights. For increased accuracy of the machine-learning model, the security indicator may be determined at the bus level and/or contingency level.

## Description

### BACKGROUND

### Field of the Invention

The embodiments described herein are generally directed to dynamic security forecasting, and, more particularly, to forecasting stability in a power network based on a security indicator.

### Description of the Related Art

For operators to make informed dispatch decisions to preserve system security within power systems, such as a power grid or other power network, the operators need tools that are able to predict the dynamic behaviors of the power systems. One such tool is a dynamic security assessment (DSA). A dynamic security assessment predicts the dynamic behavior of current and/or future defined operating points of the power system, subject to operator-defined contingencies. Dynamic security assessment is concerned with security against instabilities caused by shocks, such as short circuits, or by sudden forced outages of generators, and the resulting dynamic power and voltage swings. Typically, the dynamic behaviors of interest are the quantities of rotor angles, system frequency, and bus voltages. Instabilities in the power system, resulting from these quantities, may result in the tripping of affected equipment, which can eventually compromise the integrity of the power system.

Normally, dynamic security assessments are performed at regular intervals for a power system with operator involvement, to provide the operator with situational awareness of the current and future states of the power system, as defined by generation dispatch, load, and pre-scheduled equipment maintenance. However, a dynamic security assessment may also be performed on demand, to evaluate a sudden change in an operating point, such as a change caused by a forced power or power-line outage.

There remains room for improvement for dynamic security assessments. In particular, it would be advantageous if the entire process of dynamic security assessment could be automated, for continuous, uninterrupted dynamic security forecasting, to provide real-time situational awareness of the dynamic security of a power system.

### SUMMARY

Accordingly, systems, methods, and non-transitory computer-readable media are disclosed for forecasting stability in a power network based on a security indicator. An objective achievable by disclosed embodiments is the use of a security indicator, which enables the calculation of a proximity or approach speed or trajectory of a power system with respect to instability, as well as an estimate of when the power system will reach instability. This enables the operator of the power system to determine how much time there is to implement one or more preventive actions, as well as to provide other decision support to the operator.

In an embodiment, a method of facilitating stability in a power network comprises using at least one hardware processor to, for each of one or more operating points for the power network, perform a dynamic security assessment by: applying a machine-learning model to the operating point to determine a value of a security indicator representing stability in the power network, wherein the value of the security indicator is a numerical value within a numerical range in which a first end of the numerical range represents instability and a second end of the numerical range represents stability; and determining whether or not the power network is stable for the operating point based on the determined value of the security indicator.

Determining whether or not the power network is stable may comprise: determining that the power network is stable when the determined value of the security indicator satisfies a threshold; and determining that the power network is not stable when the determined value of the security indicator does not satisfy the threshold.

The method may further comprise using the at least one hardware processor to determine a proximity of the power network to instability based on the determined value of the security indicator. Determining the proximity of the power network to instability may comprise calculating a difference between the determined value of the security indicator and a threshold.

The one or more operating points may be a plurality of consecutive operating points, wherein the method further comprises using the at least one hardware processor to, when determining that the power network is stable, determine a speed at which the power network is approaching instability based on the determined values of the security indicator from the dynamic security assessments for the plurality of consecutive operating points. Determining the speed at which the power network is approaching instability may comprise calculating a rate of change between the determined values of the security indicator from at least two of the dynamic security assessments for the plurality of consecutive operating points.

The one or more operating points may comprise at least one forecasted operating point for a future time point, such that the determined value of the security indicator from the dynamic security assessment for that at least one forecasted operating point is a predicted value of the security indicator at the future time point.

The one or more operating points may be a plurality of operating points, wherein the plurality of operating points comprises two or more past operating points for respective past time points, and wherein the method further comprises using the at least one hardware processor to predict a value of the security indicator for at least one future time point based on a time series of the determined values of the security indicator from the dynamic security assessments for the two or more past operating points.

The one or more operating points may be a plurality of operating points, wherein the plurality of operating points comprises two or more past operating points for respective past time points and at least one forecasted operating point for a future time point, and wherein the method further comprises using the at least one hardware processor to: predict an intermediate value of the security indicator for the future time point based on a time series of the determined values of the security indicator from the dynamic security assessments for the two or more past operating points; and determine a final value of the security indicator for the future time point based on the predicted value of the security indicator for the future time point and the determined value of the security indicator from the dynamic security assessment for the at least one forecasted operating point.

Applying the machine-learning model to the operating point to determine the value of the security indicator may comprise: executing the machine-learning model to output a bus-specific value of the security indicator for each of a plurality of buses in the power network; and determining a global value of the security indicator, as the determined value of the security indicator, based on the bus-specific values of the security indicator. The plurality of buses may include every bus in the power network. At least one of the plurality of buses may be unconnected to any synchronous machine.

Applying the machine-learning model to the operating point to determine the value of the security indicator may comprise: executing the machine-learning model to output a contingency-specific value of the security indicator for each of a plurality of contingencies; and determining a global value of the security indicator based on the contingency-specific values of the security indicator.

Applying the machine-learning model to the operating point to determine the value of the security indicator may comprise: executing the machine-learning model to output a bus-and-contingency-specific value of the security indicator for each of a plurality of buses in the power network and for each of a plurality of contingencies; and determining a global value of the security indicator based on the bus-and-contingency-specific values of the security indicator.

The method may further comprise using the at least one hardware processor to, when the dynamic security assessment for at least one of the one or more operating points determines that the power network is unstable for the at least one operating point, control one or more components of the power network to mitigate instability in the power network. Controlling one or more components of the power network to mitigate instability in the power network may comprise one or more of shedding one or more loads, re-dispatching one or more power generators, tripping one or more power generators, reconfiguring a topology of the power network, or adjusting one or more setpoints of the one or more components. The one or more components may comprise a special protection system (SPS).

The machine-learning model may comprise a message-passing neural network, wherein each of the plurality of training records comprises a nodal tensor that has a nodal dimension, representing a plurality of buses in the power network, and a feature dimension, representing the value of each of the one or more parameters at each of the plurality of buses.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions (e.g., a computer program) stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow between different components of the infrastructure, according to an embodiment;
FIG. 4 illustrates an example process for training a machine-learning model, according to an embodiment;
FIG. 5 illustrates an example process for generating a training dataset, according to an embodiment;
FIG. 6 illustrates an example structure of a training dataset, according to an embodiment;
FIG. 7 illustrates an example process for dynamic security assessment, according to an embodiment;
FIG. 8 illustrates a process for acquiring future operating point(s), according to an embodiment;
FIGS. 9A-9H illustrate data flows for determining a security indicator, according to alternative embodiments; and
FIGS. 10A-10C illustrate an architecture of a message-passing neural network, according to embodiments of a machine-learning model.

### DETAILED DESCRIPTION

In an embodiment, systems, methods, and non-transitory computer-readable media are disclosed for forecasting stability in a power network based on a security indicator. Disclosed embodiments may provide continual or continuous dynamic security forecasting (e.g., in real time, based on real-time supervisory control and data acquisition (SCADA) data) to provide information regarding the proximity of the power network to dynamic stability limits (e.g., of rotor angle instability, short-term voltage instability, etc.) and/or the speed of approach towards those dynamic stability limits. Such information can be provided to an operator or control system, for enhanced situational awareness, so that proactive remedial actions (e.g., re-dispatching power generation, arming remedial action schemes, load shedding, etc.) can be performed, before the power network becomes unstable. An embodiment of the dynamic security forecasting uses machine-learning determinations of the stability indicator, with or without load forecasts, to support decision-making during the operation of the power network and maintain the power network in a secure state. For increased accuracy in the dynamic security forecasting, the security indicator may be performed at the bus-level and/or contingency-level. The use of a machine-learning model to generate values of a security indicator enables the dynamic security assessments to be automated, thereby relieving human operators of the burden of interactively performing dynamic security assessments.

After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Infrastructure

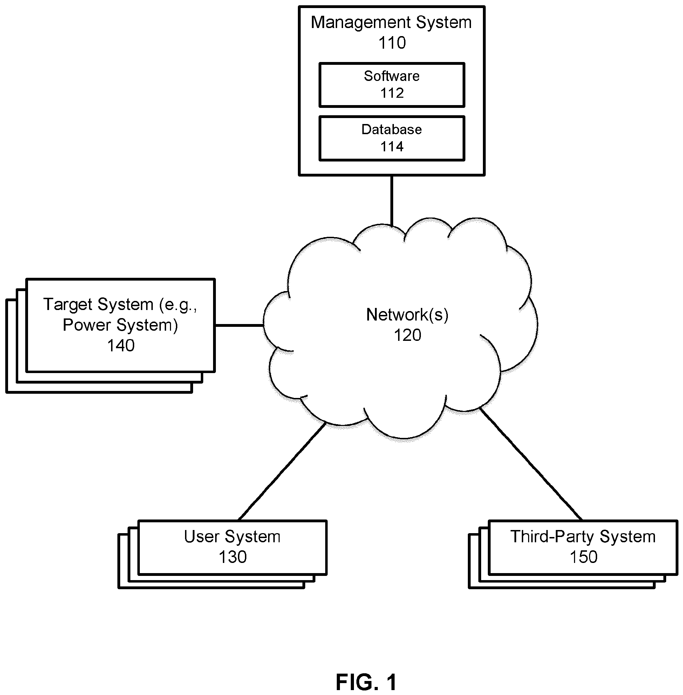

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems 130, target systems 140, third-party systems 150, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data are monitored, analyzed, and/or acted upon. In general, target system 140 may comprise any system for which data are to be analyzed and/or acted upon. However, in the context of specific, non-limiting examples that are provided throughout the present disclosure, it will be assumed that target system 140 comprises or consists of a power system, and particularly, a power network. A power network may comprise one or more, and generally a plurality of, power assets connected in a network, which may comprise a power distribution network, a power transmission network, and/or the like. The power assets may comprise power resources, such as power generators, energy storage systems, electrical loads (e.g., rechargeable energy storage system or other controllable load, non-controllable load, etc.), and/or the like, as well as other types of power assets, such as transformers, circuit breakers, inverters, branches or other lines, and/or any other electrical component supporting the power system. Power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Electrical loads may comprise anything that consumes power, including, without limitation, electric vehicles, appliances, machines, commercial buildings, residential buildings, and/or the like.

Third-party system(s) 150 may comprise any type or types of computing devices capable of wired and/or wireless communication. However, it is generally contemplated that third-party system 150 would comprise one or more servers that supply extrinsic data to management system 100. The extrinsic data may represent historical, current, and/or forecasted values of one or more parameters, relevant to target system 140, such as weather parameters (e.g., temperature, humidity, wind speed, pressure, etc.), market parameters (e.g., energy prices), socio-political events (e.g., protests, law-enforcement warnings, etc.) and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL^{™}, Oracle^{™}, IBM^{™}, Microsoft SQL^{™}, Access^{™}, PostgreSQL^{™}, MongoDB^{™}, and/or the like, and including cloud-based databases, proprietary databases, and unstructured databases.

### 2. Example Processing Device

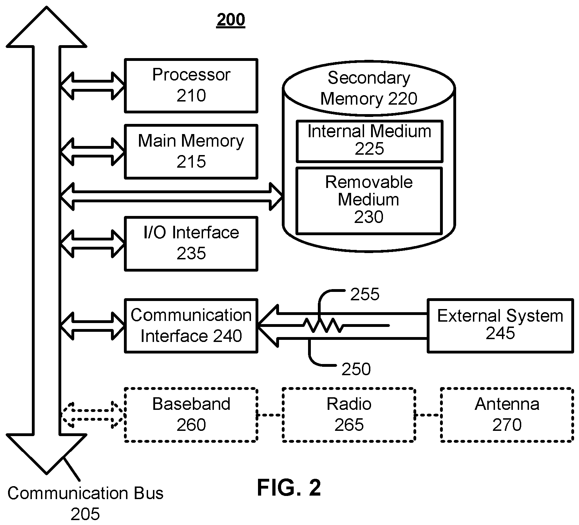

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, target system(s) 140, third-party system(s) 150, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

### 3. Example Data Flow for Target System Management

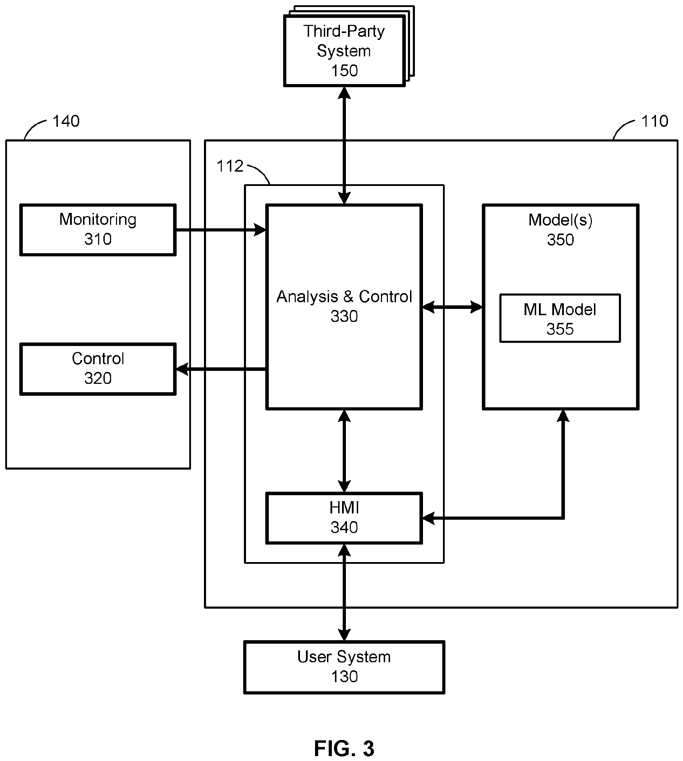

FIG. 3 illustrates an example data flow between a management system 110, a user system 130, a target system 140, and one or more third-party systems 150, according to an embodiment. Target system 140 may comprise a monitoring module 310 and a control module 320. Software 112 of management system 110 may comprise an analysis and control module 330, and a human-to-machine interface (HMI) 340. Analysis and control module 330 may interact with or comprise one or more models 350, which may be stored in database 114 of management system 110. It should be understood that communications between the various systems may be performed via network(s) 120. In addition, communications between a pair of modules may be performed via an application programming interface (API) provided by one of the modules or by other interprocess communication means.

Monitoring module 310 may monitor and collect data that are output by one or more sensors in target system 140 (e.g., sensors in the power network of a power system). In addition, monitoring module 310 may otherwise derive data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power network), edges (e.g., power lines within the power network), or other points within a network of target system 140. The system telemetry may be communicated from monitoring module 310 to analysis and control module 330 in real time, as data are collected and/or otherwise derived, or periodically. As used herein, the terms "real time" or "real-time" include events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with at least one of model(s) 350 to determine a configuration for target system 140 (e.g., one or more resources or other power assets in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs (e.g., via human-to-machine interface 340).

Each third-party system 150 may supply extrinsic data to analysis and control module 330. Third-party system 150 may transmit or push the extrinsic data to analysis and control module 330 (e.g., via an API of analysis and control module 330). Alternatively, analysis and control module 330 may retrieve or pull the extrinsic data from third-party system 150 (e.g., via an API of third-party system 150). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power system, the exogenous data may comprise one or more historical and/or forecast weather parameters, such as temperature, humidity, solar insolation, wind, barometric pressure, precipitation, alerts, and/or the like. In this case, third-party system 150 may comprise a weather service, such as the United States National Weather Service. As another example, the extrinsic data may comprise one or more historical and/or forecast market parameters, such as an energy price in a primary or ancillary services market. In this case, third-party system 150 may comprise an energy market in which energy is traded.

Analysis and control module 330 may receive intrinsic data from monitoring module 310 and/or database 114 and/or receive extrinsic data from one or more third-party systems 150, and derive the value of each of one or more input features from the received intrinsic and/or extrinsic data. The received data may itself comprise the value of an input feature, or the value of an input feature may be otherwise derived (e.g., calculated, inferred, interpolated, imputed, etc.) from the received data. Analysis and control module 330 may input the values of the input features into at least one of model(s) 350 (e.g., machine-learning model 355), which may output values of a target. As discussed elsewhere herein, machine-learning model 355 may determine, as the target, a value of a security indicator, representing stability in a power network, based on an operating point of the power network as the input features. As used herein, "stability" may refer to rotor angle stability, frequency stability, voltage stability, voltage angle stability, small-signal angle stability, and/or the like. For rotor angle stability, the security indicator may quantify the risk that a synchronous machine or group of tightly coupled synchronous machines (e.g., within a power plant) at a given bus disconnects from other synchronous machines. While rotor angle stability would not apply to buses that are not connected to a synchronous machine, such a stability indicator may still be useful at such buses. For voltage stability, the security indicator may quantify the risk that the voltage at a given bus violates the specification of voltage stability (i.e., does not recover sufficiently fast after a fault, which may result, for example, in load disconnection, motor stalling and disconnection, and/or the like).

Analysis and control module 330 may make decisions and/or perform operations on target system 140, based on the value of the target output by model(s) 350. As an example, analysis and control module 330 may utilize the value of the target to determine an optimal configuration of target system 140 at some future time. Based on this determination, analysis and control module 330 may automatically (i.e., without any user involvement), semi-automatically (e.g., with user approval or confirmation via human-to-machine interface 340), or manually (e.g., in response to a manual user request via human-to-machine interface 340) initiate a control operation, to change a real-time or scheduled operation of target system 140, based on the optimal configuration. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power system, examples of such control include, without limitation, setting a setpoint (e.g., active and/or reactive power for power generators, voltage, etc.), adjusting the power output of a power generator, adjusting the charging or discharging of an energy storage system, adjusting the power input to a load, activating or deactivating a load, closing or opening a switch (e.g., circuit breaker), and/or the like.

Human-to-machine interface 340 may generate a graphical user interface that is transmitted to user system 130, and receive inputs to the graphical user interface via user system 130. The graphical user interface may provide information regarding the current state of target system 140 determined from the system telemetry, a predicted state (e.g., stability or instability) of target system 140 determined by analysis and control module 330, a configuration of target system 140 determined by analysis and control module 330, a control decision or recommendation for target system 140 determined by analysis and control module 330, and/or the like. In addition, the graphical user interface may provide inputs that enable a user of user system 130 to configure settings of analysis and control module 330, train, configure, test, and/or deploy model(s) 350, accept or reject decisions, or recommendations, specify, approve, and/or reject controls to be transmitted to control module 320 of target system 140, analyze target system 140, and/or the like.

Each of model(s) 350, which may comprise a machine-learning model 355, a system model (e.g., network model) of target system 140, and/or the like, may be stored as a data structure in database 114 and accessed by modules, such as analysis and control module 330, via any known means (e.g., via an API of database 114, a direct query of database 114, etc.). For example, a model 350 (e.g., machine-learning model 355) may be loaded into memory (e.g., 215 and/or 220) from database 114 and executed by management system 110 as a service (e.g., as a microservice) that is accessible to analysis and control module 330 via an API. Management system 110 may provide individual model(s) 350 for each target system 140 that is managed by management system 110, and/or a collective model 350 or set of models 350 that is used for two or more target systems 140.

### 4. Machine-Learning Model

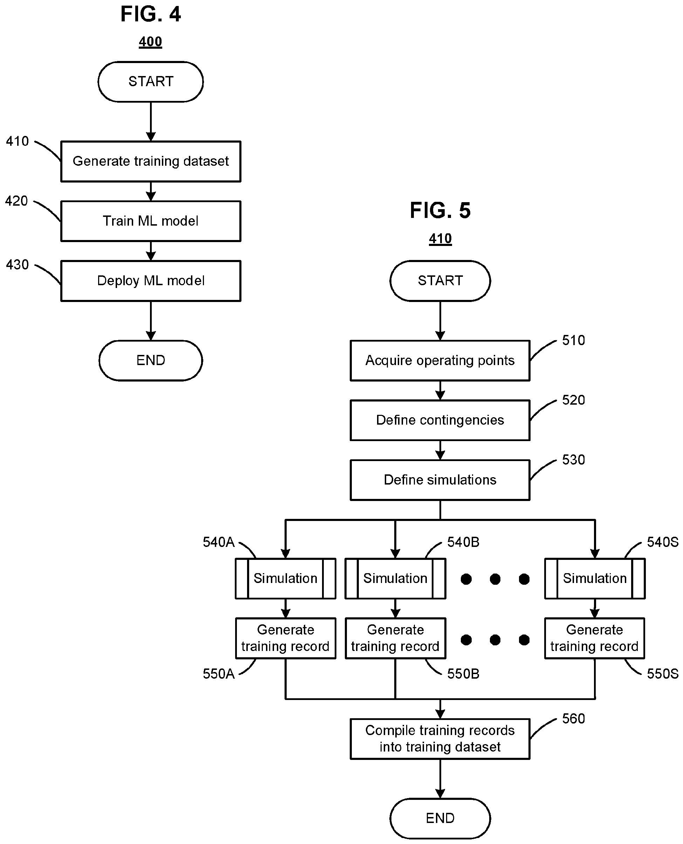

FIG. 4 illustrates an example process 400 for training machine-learning model 355, according to an embodiment. Training process 400 may be implemented by software 112. While training process 400 is illustrated with a certain arrangement and ordering of subprocesses, training process 400 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Initially, subprocess 410 may generate a training dataset. In particular, subprocess 410 may generate a training dataset that comprises a plurality of training records. Each of the plurality of training records may correspond to an operating point. An operating point comprises data representing the attributes of a power network, including, for example, numerical data at each of a plurality of buses in the power network (e.g., complex power, complex voltage, etc.) and/or topological data about the power network (e.g., buses, power lines, machines, shunt devices, such as capacitors and inductors, and/or the like, including any buses, power lines, machines, shunt devices, and/or the like that are out of service). The plurality of buses may comprise all buses in the power network. In the context of subprocess 410, the operating point may be a historical operating point or simulated operating point of the power network.

In an embodiment, each of the plurality of training records comprises, for each of the plurality of buses in the power network, a value of each of one or more parameters at that bus and a label indicating the value of a security indicator for that bus. The one or more parameters at each bus may comprise one or more of complex power (e.g., active and reactive power), complex voltage, or a status of at least one (e.g., every) adjacent line of the bus. The label may be a binary label that indicates either that the bus is secure or stable (e.g., a value of "1") or that the bus is insecure or unstable (e.g., a value of "0"). In other words, if the security indicator is denoted as σ, σ ∈ {0,1} in the training phase. At the bus level, the label may indicate whether or not the respective bus is stable or unstable. In an alternative embodiment, each of the plurality of training records may comprise, a value of each of one or more parameters at each of a plurality of buses in the power network, and a label indicating the value of the security indicator for the entire power network. In other words, in the first embodiment, the label comprises bus-specific or bus-level security indicators, whereas, in the second embodiment, the label comprises a single global security indicator. A bus-specific security indicator may indicate whether or not the bus has stability, whereas a global security indicator may indicate whether or not every bus in the power network has stability.

The training dataset may include one or more training records for each of a plurality of operating points with each of one or more, and preferably a plurality of, contingencies. In an embodiment, the plurality of operating points comprises a sampling of operating points that vary in terms of the numerical data at the plurality of buses and/or the topological data. In an embodiment, each of the plurality of operating points is considered for each of a plurality of contingencies. A contingency is a failure of at least one power asset in the power network, such as the failure of a power line, power generator, electrical load, transformer, Flexible Alternating Current Transmission System (FACTS) device, or the like. The plurality of contingencies may comprise all contingencies that may result in instability within the power network and for which it is desired that machine-learning model 355 account.

The training dataset will typically be unbalanced. In particular, the training dataset may contain many more training records representing (e.g., labeled with) stability than representing instability, since the power network is normally stable. In this case, standard rebalancing techniques may be employed to increase the ratio of training records representing instability, relative to training records representing stability.

Subprocess 420 may use the training dataset, generated in subprocess 410, to train machine-learning model 355 to output a value of the security indicator at each of at least a subset of the plurality of buses. In a preferred embodiment, machine-learning model 355 is trained to output a bus-specific value of the security indicator at each and every one of the plurality of buses. In an alternative embodiment, machine-learning model 355 is trained to output a global value of the security indicator for the entire power network.

Machine-learning model 355 may be trained, using the training dataset, in one or more supervised learning sessions. Machine-learning model 355 may comprise any machine-learning algorithm(s) that are capable of predicting the value of a target based on tabular data, such as a random forest algorithm, a gradient-boosting algorithm, a regression algorithm, a support vector machine, an artificial neural network, or the like. In a preferred embodiment, machine-learning model 355 is a message-passing neural network, as described elsewhere herein. The machine-learning algorithm may be trained, in any suitable manner, so as to minimize an error, according to a suitable loss function, between the output of the machine-learning algorithm for the training records and the respective labels of those training records. For example, for each training record in the training dataset, machine-learning model 355 may be executed, and an error, between the value of the security indicator that is output by machine-learning model 355 for the training record and the true value of the security indicator in the training record, may be calculated according to the loss function. Subprocess 420 may also comprise validating and testing a performance metric of the machine-learning algorithm after training, as well as potentially retraining the machine-learning algorithm until a sufficient performance metric is achieved.

Subprocess 430 may deploy machine-learning model 355, after it has been sufficiently trained in subprocess 420. For instance, machine-learning model 355 may be deployed from a training or development environment to an operating or production environment. As an example, machine-learning model 355 may be deployed with an application programming interface that is accessible to other services executing on management system 110 (e.g., in a microservices architecture), such as analysis and control module 330. Alternatively, the machine-learning may be integrated into analysis and control module 330 and/or stored in database 114.

FIG. 5 illustrates an example of subprocess 410, in process 400, for generating a training dataset, according to an embodiment. Subprocess 410 may be implemented by software 112. While subprocess 410 is illustrated with a certain arrangement and ordering of subprocesses, subprocess 410 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Subprocess 510 may acquire a plurality of operating points *OP*₁, *OP*₂, *..., OP_{M}* for the power network being modeled. The plurality of operating points may comprise historical operating points (i.e., actual operating points of the power network observed in the past) and/or simulated operating points (e.g., generated via simulated operation of the power network). The plurality of operating points define the space over which the dynamic security assessment is to be conducted during the operation phase. Thus, collectively, the operating points should be sufficiently varied, in terms of network topology, so as to generalize over all possible, probable, or feasible topological variations.

As mentioned above, each of the plurality of operating points may comprise numerical data (e.g., complex power, complex voltage, etc.) for each of a plurality of buses in the power network and preferably for every bus in the power network, and/or topological data about the power network. **In** other words, each operating point is a snapshot of the power network. In an embodiment, each operating point is characterized by complex power (i.e., active and reactive power) of generation and load at each bus in the power network, complex voltages (i.e., amplitude and angle) at each bus in the power network, the operating state of each power asset (e.g., running or not running, in the case of a power generator), and the topology of the power network (e.g., operational status of power lines, transformers, and/or other power assets).

**In** an embodiment, at least one of the plurality of buses in the power network, which is represented in each operating point (e.g., in both the training and operation phases), is not connected to any synchronous machine. A synchronous machine is an electrical machine that converts mechanical energy into electrical energy, or vice versa. It should be understood that, in general, at least one power generator connected to a bus will be a synchronous machine. Thus, the plurality of buses will typically comprise a mixture of buses that are connected to a synchronous machine and buses that are not connected to any synchronous machine.

Subprocess 520 may define one or more contingencies for which machine-learning model 355 is to be trained to account. **In** an embodiment, a plurality of contingencies *C*₁, *C*₂, ..., *C_{N}* are defined. Again, the plurality of contingencies may comprise all contingencies that may result in instability within the power network and for which it is desired that machine-learning model 355 account (e.g., all contingencies for which dynamic security assessment is to be performed). For example, a set of contingencies may be added that each represents the failure of a different one of the power lines in the power network, a set of contingencies may be added that each represents the failure of a different one of the generators in the power network, a set of contingencies may be added that each represents the failure of a different one of the loads in the power network, a set of contingencies may be added that each represents the failure of a different one of the transformers in the power network, a set of contingencies may be added that each represents the failure of a different one of the FACTS devices in the power network, and/or the like. The contingencies may be comprehensive in the sense that they may collectively cover the failure of every power asset (e.g., every node and/or edge) in the power network, every critical power asset in the power network, a representative sampling of the power assets in the power network, or the like. Essentially, every contingency for which dynamic risk assessment is desired should be included.

Subprocess 530 may define one or more simulations to be run on the operating points, acquired in subprocess 510, and the contingencies defined in subprocess 520. In general, subprocess 530 will define a plurality of simulations. Each simulation will be defined by a combination (*OPₘ, Cₙ*), *m* ∈ *M, n* ∈ *N,* of an operating point with a contingency. In a full factorial embodiment, subprocess 530 defines the Cartesian product of the operating points *OP*₁, *OP₂,* ..., *OP_{M}* and contingencies *C*₁*, C*₂*, ..., C_{N},* such that there are *M* × *N* simulations (*OP*₁, *C*₁), (*OP*₁, *C*₂), ..., (*OP*₁, *C_{N}*), (*OP*₂, *C*₁), (*OP*₂, *C*₂), *...,* (*OP*₂, *C_{N}*), ..., (*OP_{M}, C*₁), (*OP_{M}*, *C*₂), ..., (*OP_{M}, C_{N}*). Alternatively, subprocess 530 may define only some subset of all possible combinations. It should be understood that each simulation will be defined by an operating point (e.g., numerical and/or topological data) in which the contingency has occurred (e.g., failure of a power asset, for example, affecting the topology of the power network).

Simulations 540A, 540B, ..., 540S may be executed for each simulation that was defined in subprocess 530 (e.g., S *= M* × *N*)*.* As used herein, a reference numeral with an appended letter will be used to refer to a specific component, whereas the same reference numeral without any appended letter will be used to refer collectively to a plurality of the component or to refer to a generic or arbitrary instance of the component. Thus, for example, the term "simulations 540" refers collectively to simulations 540A, 540B, and 540S, and the term "simulation 540" may refer to any single one of simulations 540A, 540B, or 540S. Simulations 540 may be executed in parallel, serially, or both in parallel and serially (e.g., as serial batches, in which each simulation 540 is executed in parallel with the other simulations 540 in the same batch). Each simulation 540 may comprise a dynamic security assessment of the respective operating point with the respective contingency (*OPₘ, Cₙ*). The result R of each simulation 540 (i.e., dynamic security assessment) will be an indication of whether or not the power network is stable, given the operating point and contingency (*OPₘ*, *Cₙ*). In an embodiment, the result *R* of each simulation will comprise, for each of the plurality of buses in the power network, the value of the security indicator of whether that bus is stable or unstable (e.g., σ ∈ {0,1}). In practice, the vast majority of buses will generally remain stable, whereas a handful of buses will exhibit instability.

Subprocesses 550A, 550B, ..., 550S may generate a training record based on the result of each respective simulation 540A, 540B, ..., 540S. Each training record may comprise a representation of the operating point and contingency (*OPₘ*, *Cₙ*) and the result *R*_{*m*,*n*} (e.g., the value of the stability indicator, e.g., σ ∈ {0,1}) of the respective simulation 540. Thus, each training record may be denoted as (*OPₘ, Cₙ*, *R_{m,n}*), which represents a trajectory of the power network. In the same manner as simulations 540, subprocesses 550 may be performed in parallel and/or serially.

Subprocess 560 may compile all of the training records, generated in subprocesses 550, into the training dataset. This training dataset may be stored as a simulation database, for example, within database 114, for subsequent use (e.g., in subprocess 420 of training process 400). Notably, the use of stability at each of the plurality of buses drastically increases the size of the training dataset, relative to an alternative embodiment that only considers the global stability of the power network as a whole or only considers the stability of buses with synchronous machines.

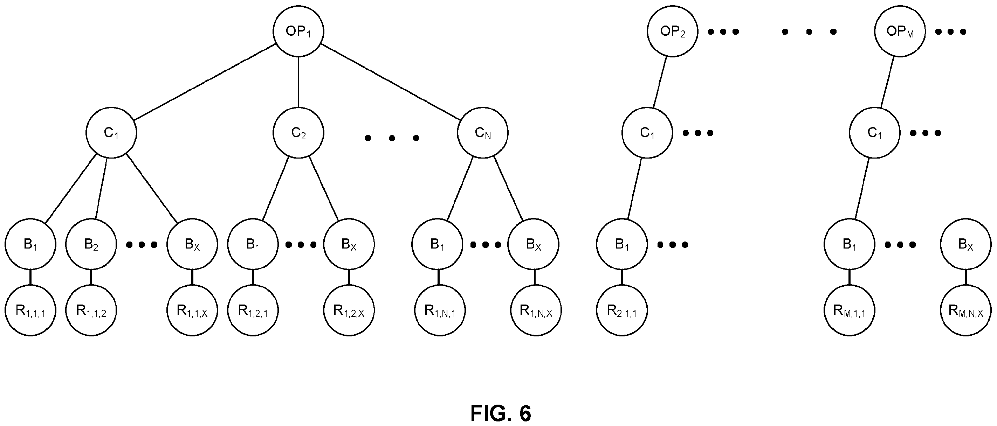

FIG. 6 illustrates an example structure of a training dataset, according to an embodiment. In the illustrated embodiment, the security indicator is provided at the level of each operating point, each contingency, and each bus in the power network. Thus, assuming that there are *X* buses in the power network, a result *R*_{*m*,*n*,}*ₓ (m* ∈ *M, n* ∈ *N, x* ∈ *X*) is provided for each bus *Bₓ,* for each contingency *Cₙ*, and for each operating point *OPₘ.*

### 5. Dynamic Security Assessment

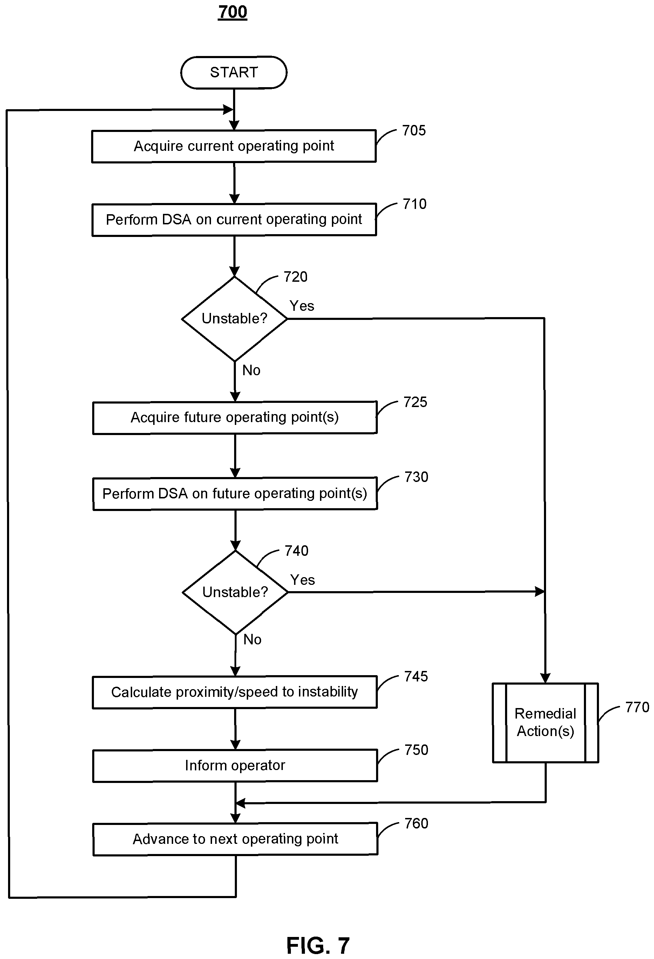

FIG. 7 illustrates an example process 700 for dynamic security assessment, according to an embodiment. Process 700 may be implemented by software 112. While process 700 is illustrated with a certain arrangement and ordering of subprocesses, process 700 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Process 700 may be executed continuously for as long as management system 110 and target system 140 are operational. Alternatively, process 700 may be toggled on or off by an operator (e.g., via human-to-machine interface 340) and/or another system. It will be assumed herein that target system 140 is a power network, such as a power grid. As will be discussed below, process 700 may be an iterative process that executes an iteration for each of one or more, and generally a plurality of, operating points for the power network.

Initially, subprocess 705 may acquire a current operating point of the power network (e.g., derived from the system telemetry from monitoring module 310 of target system 140). This operating point may comprise the same information as the historical and/or simulated operating points that were used to train machine-learning model 355. For example, the current operating point, acquired in subprocess 705, may comprise numerical data (e.g., complex power, complex voltage, etc.) for each of the plurality of buses in the power network, and/or topological data about the power network. The current operating point may be derived from current SCADA measurements of generator outputs, bus loads, network topology from switch statuses, and/or the like.

Subprocess 710 may perform a dynamic security assessment on the current operating point that was acquired in subprocess 705, to determine a value of the security indicator for the current operating point. In particular, subprocess 710 may apply machine-learning model 355 to the current operating point to determine a value of the security indicator, representing stability in the power network. In an alternative embodiment, the value of the security indicator may be determined by evaluating a dynamic simulation of the power network. In either case, the value of the security indicator may be a numerical value within a numerical range, in which a first end of the numerical range (e.g., zero) represents instability and a second end of the numerical range (e.g., one) represents stability. For example, the value of the security indicator, output by machine-learning model 355, may be a continuous value between zero and one inclusive (i.e., σ ∈ [0,1]). In other words, whereas the labels, used during the training phase, are a binary value, the output of machine-learning model 355, during the operating phase, may be a continuous value between the two binary values, representing a degree of stability or instability. Alternatively, the value of the security indicator, output by machine-learning model 355, may be a discrete value (e.g., a quantized value) from among a plurality of possible values of the security indicator. In this case, machine-learning model 355 may act as a classifier to classify the operating point into one of a plurality of quantized buckets. representing varying degrees of stability or instability. In general, the power network is considered insecure or unstable if at least one contingency is found to result in dynamic instability. Otherwise, the power network is secure or stable.

Subprocess 720 may determine whether or not the power network is stable for the current operating point based on the value of the security indicator that was determined in subprocess 710. For example, subprocess 720 may determine that the power network is stable when the determined value of the security indicator satisfies (e.g., is greater than or equal to) a threshold. Conversely, subprocess 720 may determine that the power network is not stable when the determined value of the security indicator does not satisfy (e.g., is less than) a threshold (e.g., the same threshold or a different threshold). When determining that the power network is stable (i.e., "No" in subprocess 720), process 700 may proceed to subprocess 725. Otherwise, when determining that the power network is unstable (i.e., "Yes" in subprocess 720), process 700 may proceed to subprocess 770.

Subprocess 725 may acquire one or more, and potentially a plurality of, future operating points. Each future operating point may comprise the same information as the current operating point that was acquired in subprocess 705, but for a future time, as opposed to the current time. For example, each future operating point may comprise numerical data (e.g., complex power, complex voltage, etc.) for each of the plurality of buses in the power network, and/or topological data about the power network. In an embodiment in which a single future operating point is acquired, the future operating point may be for a future time point that is a predefined time duration in the future from the current operating point (e.g., five minutes, ten minutes, fifteen minutes, thirty minutes, one hour, several hours, twelve hours, twenty-four hours, etc., in the future). In an embodiment in which a plurality of future operating points are acquired, the future operating points may represent a future time window that starts a predefined time duration in the future from the current operating point (e.g., five minutes, ten minutes, fifteen minutes, thirty minutes, one hour, several hours, twelve hours, twenty-four hours, etc., in the future), and in which each future operating point is temporally separated by a time step (e.g., one minute, five minutes, ten minutes, fifteen minutes, thirty minutes, one hour, etc.).

Subprocess 730 may perform a dynamic security assessment on the future operating point(s) that were acquired in subprocess 725, to determine a value of the security indicator for each future operating point. Subprocess 730 may perform the dynamic security assessment, individually, for each future operating point that was acquired in subprocess 725. In the event that a plurality of future operating points are acquired, subprocess 730 may perform the dynamic security assessments for the plurality of future operating points in parallel or serially, or in batches, depending on available computing resources and/or one or more other design factors.

Subprocess 730 may be similar or identical to subprocess 710, except that the dynamic security assessment is being performed on a future operating point, as opposed to the current operating point. Thus, each dynamic security assessment in subprocess 730 may comprise applying machine-learning model 355 to the respective future operating point to determine a value of the security indicator, representing stability in the power network at the future time point that is represented by the respective future operating point. In an alternative embodiment, the value of the security indicator may be determined by evaluating a dynamic simulation of the power network. Again, in either case, the value of the security indicator may be a numerical value within a numerical range, in which a first end of the numerical range (e.g., zero) represents instability and a second end of the numerical range (e.g., one) represents stability. For example, the value of the security indicator, output by machine-learning model 355, may be a continuous value between zero and one inclusive (i.e., σ ∈ [0,1]). Alternatively, the value of the security indicator, output by machine-learning model 355, may be a discrete value (e.g., a quantized value) from among a plurality of possible values of the security indicator.

Subprocess 740 may determine whether or not the power network is stable for the future operating point(s) based on the value(s) of each security indicator that was determined in subprocess 730. Subprocess 740 may be similar or identical to subprocess 720, except that a plurality of security indicators may be evaluated in the event that a plurality of future operating points were acquired in subprocess 725. In the event that subprocess 730 outputs a plurality of security indicators for a plurality of future operating points, each security indicator may be evaluated separately by subprocess 740 or the security indicators may be aggregated into a single value of the security indicator (e.g., minimum value, maximum value, average or mean value, median value, weighted average value, for example, with security indicators for future operating points that are closer in time to the current time weighted higher than security indicators for future time points that are further in time from the current time, etc.). For instance, subprocess 740 may determine that the power network is stable when the determined value(s) of all security indicator(s) or the aggregated value of the security indicators satisfy (e.g., are/is greater than or equal to) a threshold. Conversely, subprocess 740 may determine that the power network is not stable when the determined value of at least one security indicator or the aggregated value of the security indicators does not satisfy (e.g., is less than) the threshold. It should be understood that the threshold used in subprocess 740 may be, but does not have to be, the same threshold that is used in subprocess 720. When determining that the power network is stable (i.e., "No" in subprocess 740), process 700 may proceed to subprocess 745. Otherwise, when determining that the power network is unstable (i.e., "Yes" in subprocess 740), process 700 may proceed to subprocess 770.

Notably, the security indicator, especially in an embodiment in which the value of the security indicator is a continuous numerical value within a numerical range, represents a distance of the power network from the boundary of instability. Advantageously, this distance can be used to facilitate predictions and decisions regarding the power network. The numerical range may be a bounded range (e.g., σ ∈ [0,1]) or an unbounded range. The boundary of instability may be represented by a threshold *σ_{threshold}* (e.g., *σ_{threshold}* ∈ [0,1]). In an embodiment in which the lower end of the numerical range represents instability and the higher end of the numerical range represents stability, the power network may be determined to be unstable (e.g., in subprocess 720 and/or 740) whenever *σ* ≤ *σ_{threshold}.* In the alternative embodiment in which the lower end of the numerical range represented stability and the higher end of the numerical range represents instability, the power network may be determined to be unstable (e.g., in subprocess 720 and/or 740) whenever *σ* ≥ *σ_{threshold}.*

Subprocess 745 may calculate one or more statistics based on the value(s) of the security indicator output by subprocess 730. In an embodiment in which subprocess 730 outputs a plurality of values of the security indicator, subprocess 745 may operate on each of the plurality of values of the security indicator or on an aggregate value derived from the plurality of values of the security indicator.

In an embodiment, subprocess 745 determines a proximity of the power network to instability based on the determined value of the security indicator. In particular, the proximity of the power network to instability may be calculated as the distance between a value of the security indicator and the threshold representing the boundary of instability. For example, the proximity of the power network to instability may be calculated as the absolute value of this distance. In other words, *proximity =* | *σ* - *σ_{threshold}*|. The proximity value represents how close the power network is to becoming unstable.

In an additional or alternative embodiment, subprocess 745 may determine a speed at which the power network is approaching instability. For example, there will be at least two values of the security indicator from at least two dynamic security assessments: a current value of the security indicator for the current operating point, as determined by subprocess 710; and a future value of the security indicator for at least one future operating point, as determined by subprocess 730. In an embodiment, in which there are a plurality of future operating points, there will be a plurality of future values of the security indicator. In any case, there will be a time series comprising a plurality of consecutive operating points, including the current time point and extending to a future time point. Thus, subprocess 745 may determine the speed at which the power network is approaching instability based on the determined values of the security indicator from the dynamic security assessments, performed in subprocesses 710 and 730, for the plurality of consecutive operating points. This speed may be determined by calculating a rate of change between the determined values of the security indicator from at least two, and potentially all, of the dynamic security assessments for the plurality of consecutive operating points.

Notably, the speed at which the power network is approaching instability may be either positive (i.e., if the trajectory of the values of the security indicator is towards the instability threshold *σ_{threshold}*) or negative (i.e., if the trajectory of the values of the security indicator is away from the instability threshold *σ_{threshold}*). When the speed is positive, subprocess 745 may also calculate the amount of time it will take the power network to reach the instability threshold *σ_{threshold}* and/or the future time point at which the power network will reach the instability threshold *σ_{threshold},* at the calculated speed.

Subprocess 750 may inform the operator of the statistic(s), calculated in subprocess 745, via human-to-machine interface 340. For example, subprocess 750 may display the statistic(s) in a graphical user interface of human-to-machine interface 340. As discussed above, the statistic(s) may comprise the proximity of the power network to instability, the speed at which the power network is approaching instability, the time duration it will take the power network to reach instability, and/or the time at which the power network will reach instability. The operator may utilize the statistic(s) to make an informed decision about how to operate the power network, including whether or not one or more remedial actions need to be performed and, if so, by what time those remedial action(s) must be performed. For instance, if based on the calculated speed, the power network is predicted to reach instability within forty-eight hours, the operator knows that remedial action(s) need to be performed within the next forty-eight hours.

In an embodiment, in which the value of the security indicator is calculated at the bus level and/or contingency level, as discussed in greater detail elsewhere herein, this information may also be conveyed to the operator via human-to-machine interface 340. For example, if the value of the security indicator is provided at the bus level, human-to-machine interface 340 (e.g., the graphical user interface thereof) may inform the operator of the particular bus(es) that have been determined to be unstable, so that the operator is aware of the location(s) of the instability. In addition, one or more of the statistics (e.g., proximity and/or speed) may be calculated and provided at the bus level based on the value(s) of the security indicator for each bus. Additionally or alternatively, if the value of the security indicator is provided at the contingency level, human-to-machine interface 340 (e.g., the graphical user interface thereof) may inform the operator of the particular contingency(ies) that have been determined to make the power network unstable (e.g., the contingency that produces a value of the security indicator that is closest to the instability threshold, the contingency that produces values of the security indicator that have the fastest speed of approach towards the instability threshold, the contingency that would be most impactful in terms of security and/or other factors, etc.), so that the operator is aware of which contingency(ies) should be prioritized for remediation. In addition, one or more of the statistics (e.g., proximity and/or speed) may be calculated and provided at the contingency level based on the value(s) of the security indicator for each contingency.

Subprocess 760 may advance to the next operating point. In particular, process 700 may operate over a sliding fixed-length time window that encompasses the current operating point, one or more future operating points, and potentially one or more past operating points. The time window may slide according to a time step that may be set according to one or more design factors, including the computational time required to complete an iteration of subprocesses 705-760. As examples, the time step may be one minute, five minutes, ten minutes, thirty minutes, one hour, several hours, six hours, twelve hours, twenty-four hours, or the like. It should be understood that the time window will start at the current time or the past time of the earliest past operating point and will end at the future time of the latest future operating point.

Subprocess 770 may be executed whenever the power network is determined to be currently unstable in subprocess 720, based on the dynamic security assessment performed in subprocess 710, or whenever the power network is determined to become unstable in the future in subprocess 740, based on the dynamic security assessment performed in subprocess 730. Subprocess 770 may comprise one or more remedial actions. Each remedial action may be an automatic, semi-automatic, or manual action. Examples of remedial actions include, without limitation, controlling one or more components of the power network (e.g., via control module 320) to mitigate instability in the power network, curtailing or shedding one or more loads from the power network, re-dispatching one or more power generators, tripping one or more power generators, reconfiguring a topology of the power network, adjusting one or more setpoints of one or more components of the power network, and/or the like.

The one or more components of the power network that are controlled (e.g., by adjusting one or more setpoints, arming or disarming, activation or deactivation, etc.) may comprise a special protection system (SPS). A special protection system is an automated system that is designed to detect abnormal or predetermined conditions of the power network, and perform corrective actions beyond simply isolating a faulty component, with the aim to maintain overall system reliability and stability by actively managing power flows during disturbances. While a special protection system is generally slower than traditional protection devices, a special protection system is generally capable of handling global system issues, as opposed to just local system issues.

Essentially, in an embodiment of process 700, if the power network will be insecure (i.e., dynamically unstable) based on the current operating point (e.g., as determined by subprocesses 705-720), the operator may be informed of the insecurity (e.g., with a list of one or more contingencies that produce the insecurity) and/or other remedial action(s) may be performed (e.g., in subprocess 770), and if the power network will be secure (i.e., dynamically stable) based on the current operating point (e.g., as determined by subprocesses 705-720), the security of the power network is forecasted for a future time period (e.g., by subprocesses 725-730). If the power network is forecasted to be insecure (i.e., dynamically unstable) in the future time period (e.g., as determined by subprocesses 725-740), the operator may be informed of the future insecurity (e.g., with a list of one or more contingencies that produce the future insecurity) and/or other remedial action(s) may be performed (e.g., in subprocess 770), and if the power network is forecasted to be secure (i.e., dynamically stable) in the future time period (e.g., as determined in subprocesses 725-740), one or more statistics, representing the risk of insecurity (i.e., dynamic instability) in the future time period, may be calculated (e.g., in subprocess 745) and presented to the operator (e.g., in subprocess 750).

Disclosed embodiments of the dynamic security assessment are primarily described as utilizing deterministic forecasting (i.e., point forecasting). In an alternative embodiment, the dynamic security assessments may utilize probabilistic forecasting. Probabilistic forecasting may increase the accuracy and/or usefulness of the risk forecasting. Approaches to probabilistic forecasting include, without limitation, estimating and modeling noise in the state estimation that is used to determine the future operating points, using a probabilistic approach to forecasting the future operating points, using a probabilistic predictor for the security indicator, using a probabilistic approach for forecasting the security indicator, and/or the like.

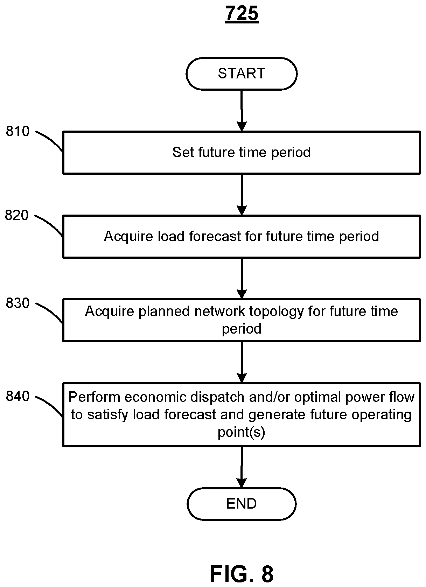

FIG. 8 illustrates an example of subprocess 725, in process 700, for acquiring future operating point(s), according to an embodiment. Subprocess 725 may be implemented by software 112. While subprocess 725 is illustrated with a certain arrangement and ordering of subprocesses, subprocess 725 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Initially, subprocess 810 may set a future time period. The future time period may start and/or end at a fixed time duration from the current time. For example, the future time period could span from the current time to a future end time. Alternatively, the future time period could span from a future start time, that is a fixed time duration from the current time, to a future end time that is a fixed time duration from the future start time or from the current time. The future time period may comprise one or more future time points. For example, the start time of the future time period may define a starting future time point and/or the end time of the future time period may define an ending future time point. In an embodiment in which a plurality of future operating points are to be acquired, one or more other future time points may be defined between the starting future time point and the ending future time point. Alternatively, in an embodiment in which only a single future operating point is to be acquired, the future time period may be represented by only a single future time point (e.g., the end time of the future time period).

Subprocess 820 may acquire a load forecast for the future time period. The load forecast may be implemented by analytics and control module 330, or another module or system. In an embodiment in which the future time period comprises a plurality of future time points, a load forecast may be acquired for each of the plurality of future time points. Any suitable load-forecasting mechanism may be used in subprocess 820, including a regression model, time series, artificial neural network, statistical learning algorithm, and/or the like. In general, a load forecast will take into account historical load data, weather data, time factors (e.g., time of the day, day of the week, season, holidays, etc.), demographic data, system constraints, policy and regulatory factors, and/or the like, and output a prediction of electricity demand (e.g., forecasted load profile) for each the future time period, including at each future time point within the future time period.

Subprocess 830 may acquire the network topology of the power network that is planned for each future time point within the future time period. The network topology may define the arrangement and interconnection of a plurality of nodes (e.g., buses and/or other power assets) and edges (e.g., power lines). The network topology at a future time point may be the same as the current network topology, or may be different from the current network topology, depending on whether or not any changes to the network topology are scheduled or predicted between the current time point and the future time point. Any such scheduled or predicted changes may be reflected in the network topology acquired by subprocess 830.

Subprocess 840 may perform an economic dispatch and/or an optimal power flow to determine a configuration of the power network that satisfied the load forecast, acquired in subprocess 820, for each future time point within the future time period. The economic dispatch or optimal power flow may be implemented by analysis and control module 330, or another module or system. As is well known in the art, an economic dispatch determines the optimal output of power generators (i.e., power-generating units) in the power network that meets the load forecast, acquired in subprocess 820. The objective in economic dispatch is to allocate generation among available power-generating units as efficiently as possible, considering factors such as generation costs, generation constraints, transmission losses, and/or the like. Economic dispatch is generally formulated as an optimization problem, and may use any suitable optimization method, such as Lambda iteration, gradient-based optimization, linear programming, or the like. As is also well known in the art, optimal power flow determines the optimal operating point by adjusting controllable variables, such as generator outputs and voltage levels, with an objective to minimize a cost function, while adhering to system constraints, such as line capacity and voltage limits. Optimal power flow is generally formulated as a non-linear optimization problem that is solved using iterative numerical methods. In any case, the output of subprocess 840 is a future operating point for each future time point in the future time period that was set in subprocess 810. Thus, in the event that the future time period includes a plurality of future time points, the output of subprocess 840 will be a plurality of future operating points.

### 6. Aggregation of Security Indicator

In an embodiment, two or more values of the security indicator may be aggregated into a global value of the security indicator. As used herein, the term "global value" is used to refer to any value that is an aggregation of two or more values. For example, bus-specific values of the security indicator may be aggregated into a global value of the security indicator, contingency-specific values of the security indicator may be aggregated into a global value of the security indicator, or bus-and-contingency-specific values of the security indicator may be aggregated into a global value of the security indicator. Alternatively, values of the security indicator may not be aggregated.

In all of the examples below, the current time point is denoted as *t*. Consequently, past time points, from most recent to least recent, may be denoted as *t* - 1*, t* - 2, *t* - 3, and so on and so forth, with each decrement representing a time step (e.g., one minute, five minutes, ten minutes, fifteen minutes, thirty minutes, one hour, several hours, six hours, twelve hours, twenty-four hours, etc.). In addition, a time duration, representing how far into the future forecasting is performed, is denoted as *f*, which may be defined in terms of time steps (e.g., one time step, several time steps, etc.). Consequently, future time points, for which forecasting is performed, may be denoted, chronologically, as *t* + *f, t + f + 1, t + f +* 2, and so on and so forth, with each increment representing a time step. In an embodiment in which the forecasting is performed for a single or starting time point that is one time step into the future from the current time, *f* = 1.

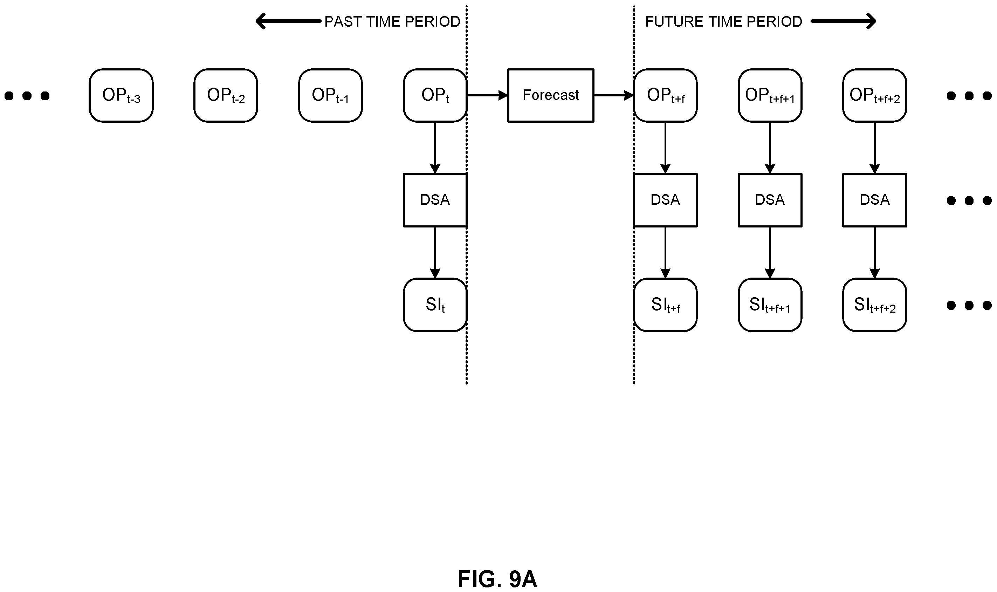

FIG. 9A illustrates a data flow for determining a security indicator, according to a first embodiment in which the values of the security indicator are not aggregated. In this embodiment, future operating points *OP*_{*t*+*f*}, *OP*_{*t*+*f*+1}, *OPt*_{+*f*+2}, ... may be forecasted (e.g., in subprocess 725) based on past operating points ..., *OP*_{*t*-3}, *OP*_{*t*-2}, *OP*_{*t*-1}, *OPt.* It should be understood that, even though the current operating point *OPt* is referred to herein as "current," the current operating point *OPt* is technically a past operating point, since it must be determined before being processed (e.g., in real time). A dynamic security assessment (DSA) is performed for the current operating point (e.g., in subprocess 710) to produce a value *SIₜ* of the security indicator, and for each of the forecasted operating points (e.g., in subprocess 730) to produce respective values *SI*_{*t*+*f*}, *SI*_{*t+f*+1}, *SI*_{*t+f*+2}, ... of the security indicator. In this embodiment, the operating points, for which dynamic security assessment is performed, comprise at least one forecasted operating point for a future time point, such that the determined value of the security indicator from the dynamic security assessment for that at least one forecasted operating point is a predicted value of the security indicator at the future time point. Based on the time series *SIt, SI*_{*t*+1}, *SI*_{*t+f*+1}, *SI*_{*t+f*+2}, ..., one or more statistics (e.g., speed) may be calculated (e.g., in subprocess 745) for decision support.

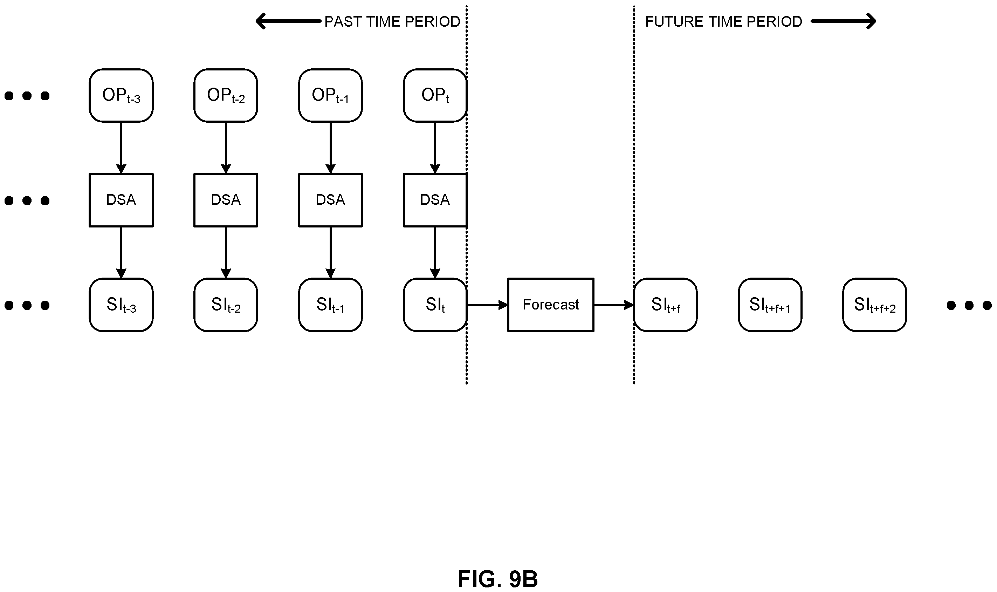

FIG. 9B illustrates a data flow for determining a security indicator, according to a second embodiment in which the values of the security indicator are not aggregated. In this embodiment, instead of forecasting operating points, value(s) of the security indicator are forecasted based on a time series of past values of the security indicator. Thus, in this embodiment, subprocess 725 may be omitted, and subprocess 730 may utilize a time-series predictor (e.g., as machine-learning model 355), such as a linear regression, autoregressive model, gradient-boosting model, artificial neural network (e.g., long short-term memory (LSTM), transformer, Neural Basis Expansion Analysis Time Series (N-BEATS)), foundation model for time-series forecasting, or the like. In particular, a dynamic security assessment is performed for a time series of past operating points ..., *OP*_{*t*-3}, *OP*_{*t*-2}, *OP*ₜ₋₁, *OPt* to produce a past time series of values of the security indicator ..., *SI*_{*t*-3}, *SI*_{*t*-2}, *SI*ₜ₋₁, *SIₜ.* This time series of values of the security indicator are then input to the time-series predictor, which forecasts a future time series of values of the security indicator *SI*_{*t*+*f*}, *SI*_{*t+f*+1}, *SI*_{*t+f*+2}, ..., or alternatively, a single future value of the security indicator *SI_{t+f}.* In other words, the operating points, for which dynamic security assessment is performed, comprise two or more past operating points for respective past time points, and a value of the security indicator for at least one future time point is predicted based on a time series of the determined values of the security indicator from the dynamic security assessments for the two or more past operating points.

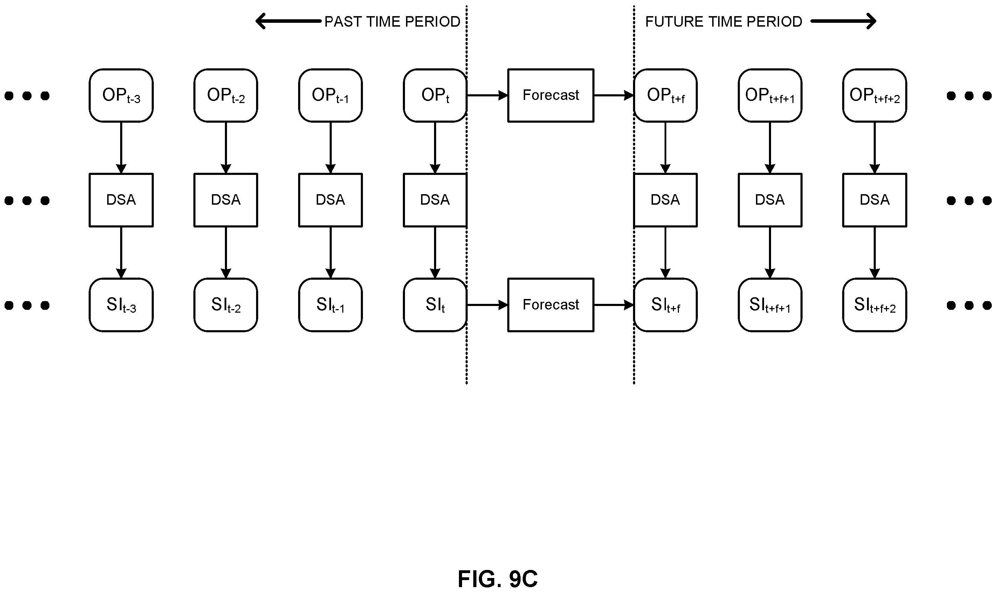

FIG. 9C illustrates a data flow for determining a security indicator, according to a third embodiment in which the values of the security indicator are aggregated. This third embodiment represents a combination of the first and second embodiments. In particular, one or more future values of the security indicator *SI*_{*t*+*f*}, *SI*_{*t+f*+1}, *SI*_{*t+f*+2}, ... may be calculated using dynamic security assessment(s) of forecasted future operating point(s) *OP_{t+f}, OP*_{*t+f*+1}, *OP*_{*t+f*+2}, ..., as well as using a forecast of the one or more future values of the security indicator *SI*_{*t*+*f*}, *SI*_{*t+f*+1}, *SI*_{*t+f*+2}, ..., based on a time series of past values of the security indicator ..., *SI*_{*t*-3}, *SI*_{*t*-2}, *SI*_{*t*-1}, *SIₜ* determined by dynamic security assessments of a time series of past operating points ..., *OP*_{*t*-3}, *OP*_{*t*-2}, *OP*ₜ₋₁, *OPt.* In other words, the operating points, used for the dynamic security assessment, comprises two or more past operating points for respective past time points and at least one forecasted operating point for a future time point, and an intermediate value of the security indicator for the future time point is predicted based on a time series of the determined values of the security indicator from the dynamic security assessments for the two or more past operating points. Then, a final value of the security indicator is determined for the future time point based on the predicted value of the security indicator for the future time point and the determined value of the security indicator from the dynamic security assessment for the at least one forecasted operating point. The final value(s) of the security indicator *SI*_{*t*+*f*}, *SI*_{*t+f*+1}, *SI*_{*t+f+*2}, *...* may be determined, from the respective dynamic security assessment(s) performed on the forecasted operating points and from the time-series-based forecast, by aggregating the two values of the security indicator for each future time point using any suitable means, including calculating the final value as the minimum of the two values, a maximum of the two values, an average or mean of the two values, a weighted average of the two values (e.g., with one of the sources weighted higher than the other), or the like.

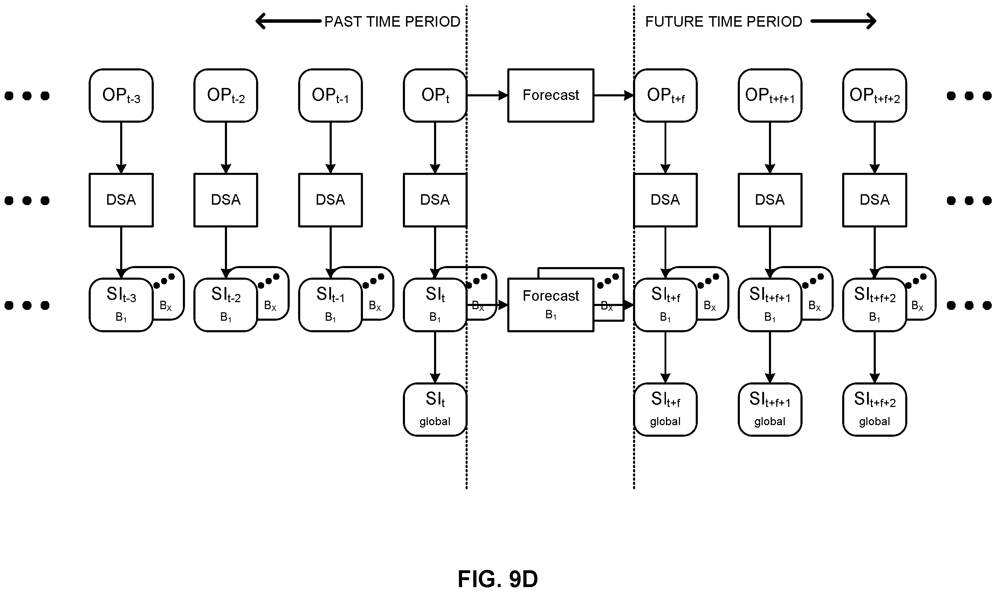

FIG. 9D illustrates a data flow for determining a security indicator, according to a fourth embodiment in which the values of the security indicator are aggregated. This embodiment operates in the same manner as the third embodiment, except that the value of the security indicator is determined at the bus level. In other words, each dynamic security assessment and forecast will produce a value of the security indicator for each of a plurality of buses in the power network. In particular, machine-learning model 355 may be executed to output a bus-specific value of the security indicator for each of the plurality of buses in the power network. Accordingly, in this embodiment, a global value of the security indicator may be determined based on the bus-specific values of the security indicator. For instance, the bus-specific values of the security indicator for the current time point may be aggregated into a global value of the security indicator for the current time point, and the bus-specific values of the security indicator for each future time point may be aggregated into a global value of the security indicator for that future time point. In each case, the aggregation may comprise calculating the global value of the security indicator as the minimum, the maximum, the average or mean, the weighted average, or the like, of the bus-specific values of the security indicator.

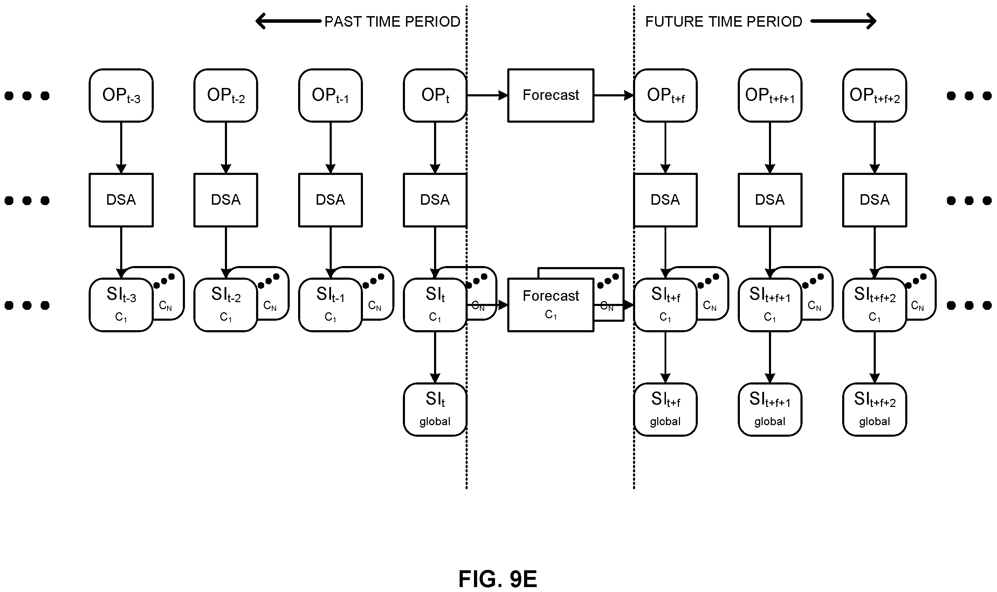

FIG. 9E illustrates a data flow for determining a security indicator, according to a fifth embodiment in which the values of the security indicator are aggregated. This embodiment operates in the same manner as the third embodiment, except that the value of the security indicator is determined at the contingency level. In other words, each dynamic security assessment and forecast will produce a value of the security indicator for each of a plurality of contingencies. In particular, machine-learning model 355 may be executed to output a contingency-specific value of the security indicator for each of the plurality of contingencies. Accordingly, in this embodiment, a global value of the security indicator may be determined based on the contingency-specific values of the security indicator. For instance, the contingency-specific values of the security indicator for the current time point may be aggregated into a global value of the security indicator for the current time point, and the contingency-specific values of the security indicator for each future time point may be aggregated into a global value of the security indicator for that future time point. In each case, the aggregation may comprise calculating the global value of the security indicator as the minimum, the maximum, the average or mean, the weighted average, or the like, of the contingency-specific values of the security indicator.

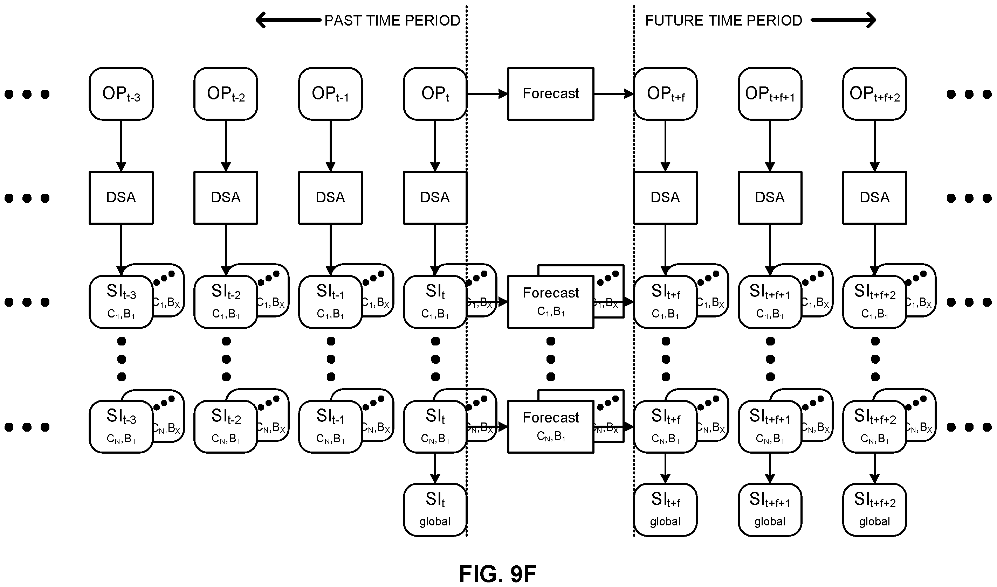

FIG. 9F illustrates a data flow for determining a security indicator, according to a sixth embodiment in which the values of the security indicator are aggregated. This embodiment is a combination of the fourth and fifth embodiments, in which the value of the security indicator is determined at both the bus level and the contingency level. In other words, each dynamic security assessment and forecast will produce a value of the security indicator for each of a plurality of buses in the power network and for each of a plurality of contingencies. In particular, machine-learning model 355 may be executed to output a bus-and-contingency-specific value of the security indicator for each of the plurality of buses in the power network and for each of the plurality of contingencies. Accordingly, in this embodiment, a global value of the security indicator may be determined based on the bus-and-contingency-specific values of the security indicator. For instance, the bus-and-contingency-specific values of the security indicator for the current time point may be aggregated into a global value of the security indicator for the current time point, and the bus-and-contingency-specific values of the security indicator for each future time point may be aggregated into a global value of the security indicator for that future time point. In each case, the aggregation may comprise calculating the global value of the security indicator as the minimum, the maximum, the average or mean, the weighted average, or the like, of the bus-and-contingency-specific values of the security indicator.

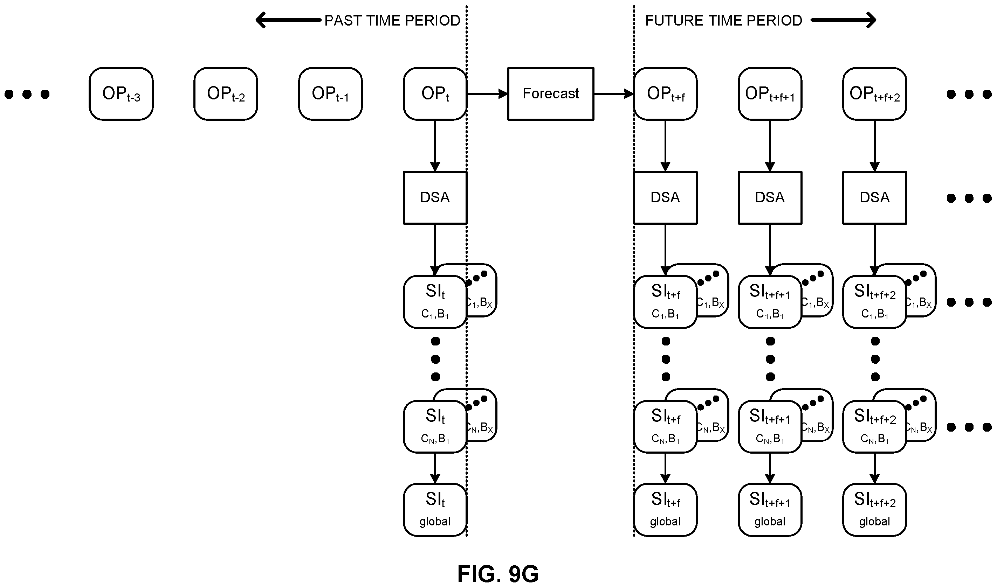

FIG. 9G illustrates a data flow for determining a security indicator, according to a seventh embodiment in which the values of the security indicator are aggregated. This embodiment is a hybrid of the first embodiment and the sixth embodiment. In particular, the time-series-based forecasting of the future values of the security indicator has been omitted, such that the bus-and-contingency-specific values of the security indicator are determined solely by the dynamic security assessment(s) performed on the forecasted operating point(s). It should be understood that a hybrid of the first embodiment with the fourth embodiment (i.e., bus-specific values of the security indicator) or fifth embodiment (i.e., contingency-specific values of the security indicator) may be implemented in a similar manner.

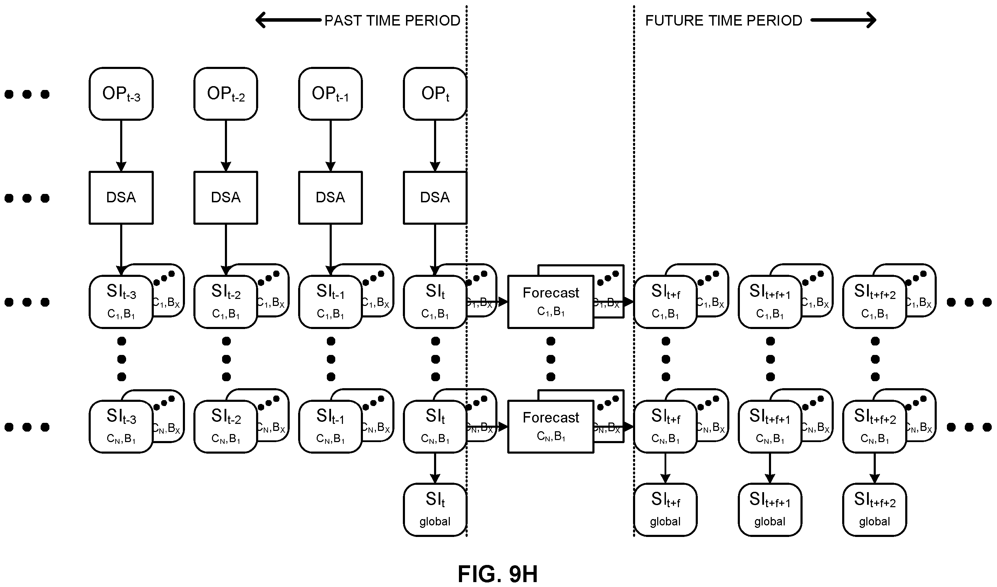

FIG. 9H illustrates a data flow for determining a security indicator, according to an eighth embodiment in which the values of the security indicator are aggregated. This embodiment is a hybrid of the second embodiment and the sixth embodiment. In particular, the dynamic security assessment(s) of forecasted operating point(s) have been omitted, such that the bus-and-contingency-specific values of the security indicator are determined solely by the time-series-based forecasting. It should be understood that a hybrid of the second embodiment with the fourth embodiment (i.e., bus-specific values of the security indicator) or fifth embodiment (i.e., contingency-specific values of the security indicator) may be implemented in a similar manner.

Relative to the determination of a single value of the security indicator per operating point, the determination of the value of the security indicator at the bus level, contingency level, or bus and contingency levels incurs a greater computational expense. However, depending on the application and from the perspective of machine learning, this may be helpful overall. In particular, when machine-learning model 355 is trained, the utilization of the security indicator at the bus and/or contingency level significantly increases the amount of training data available, and therefore, may improve the accuracy of machine-learning model 355.

### 7. Machine-Learning Model

Machine-learning model 355 may utilize any suitable architecture. For example, machine-learning model 355 could comprise a fully connected artificial neural network (ANN), convolutional neural network (CNN), graph neural network (GNN), recurrent neural network (RNN) with long short-term memory (LSTM), attention network, transformer, or the like. However, each of these architectures has disadvantages. For example, a fully connected network does not scale well. Scalability is important, since the nodes (e.g., buses) of the power network may number in the thousands, tens of thousands, hundreds of thousands, or more. While a convolutional neural network is scalable and represents mature technology, there is no natural mapping of the neural network to a power network, and some properties (e.g., locality, translation invariance, etc.) of convolutional operators are not desirable for a power network. A graph neural network is scalable and can naturally map the neural network to the power network, but performs poorly empirically. While a recurrent neural network is useful for time series, it is not appropriate for pre-screening the risk of instability. Attention networks and transformers are scalable, powerful, and versatile, but require a huge volume of training data.

In a preferred embodiment, machine-learning model 355 comprises a message-passing neural network. In this case, each of the plurality of training records in the training dataset, generated in subprocess 410 of process 400 and used to train machine-learning model 355 in subprocess 420 of process 400, may comprise a nodal tensor that has a nodal dimension, representing the plurality of buses in the power network, and a feature dimension, representing the value of each of the parameter(s) (e.g., complex power, complex voltage, etc.) at each of the plurality of buses in the power network. Suitable embodiments of a message-passing network are described in detail in International Patent Application No. PCT/EP2024/076123, filed on September 18, 2024, which is hereby incorporated herein by reference as if set forth in full.

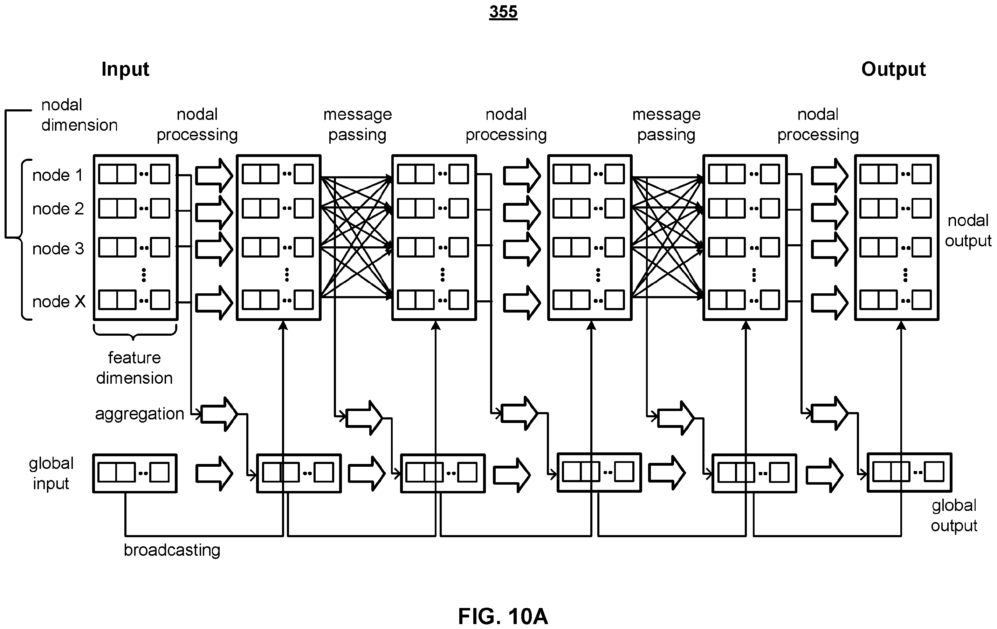

FIG. 10A illustrates an example architecture of a message-passing neural network, according to an embodiment of machine-learning model 355. As illustrated, there is a nodal input and a global input. The nodal input comprises a nodal tensor having a nodal dimension, representing all of the plurality of buses in the power network, and a feature dimension, representing the value of each of the parameters at each of the plurality of buses in the power network. The global input comprises a global feature vector, having a feature dimension, representing the value of each of one or more global parameters. Thus, in addition to processing data at the bus level, the message-passing neural network also processes data at the global level. Communication between the bus-level data and the global-level data may be implemented through steps of aggregation and broadcasting. For instance, in order to obtain a global indicator of angle instability of the entire power network, conventional max-pooling may be used to aggregate the bus-level indicators of angle instability for the plurality of buses in the power network. In addition, global data, derived from the global input, may be broadcast from the global layers to the nodal layers.

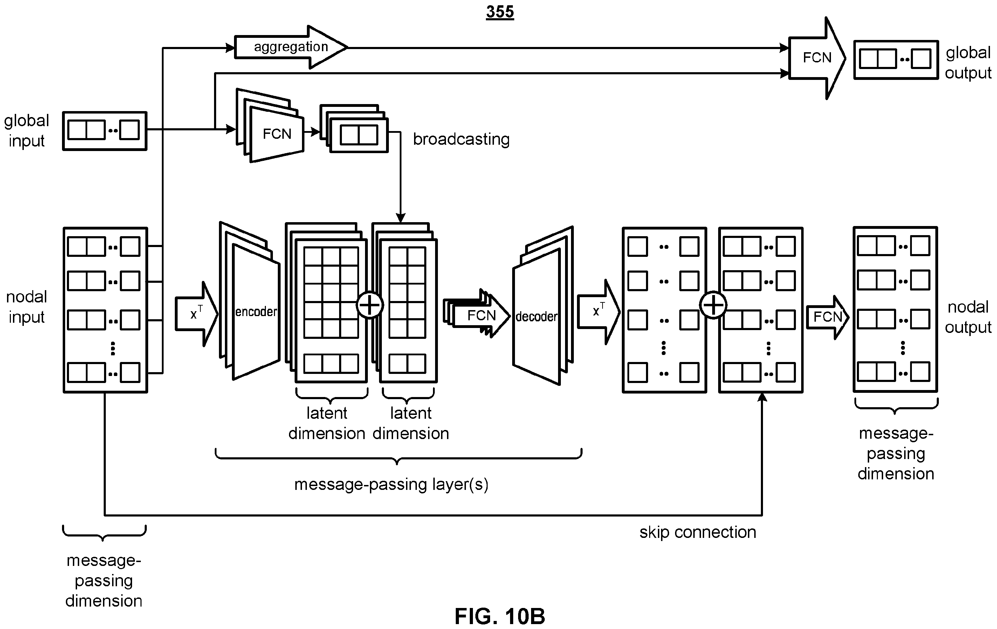

FIG. 10B illustrates an example architecture of a message-passing neural network, according to an embodiment of machine-learning model 355. Message-passing may be realized through an encoder-decoder sequence that maps data at all of the plurality of buses into a latent space. In particular, the message-passing dimension is compressed into a latent dimension by the encoder, and then decompressed back into the message-passing dimension by the decoder. A plurality of parallel message-passing layers may be implemented (e.g., three message-passing layers in the illustrated example). The global input may broadcast to the latent space, and aggregated with the nodal input to produce a global output.

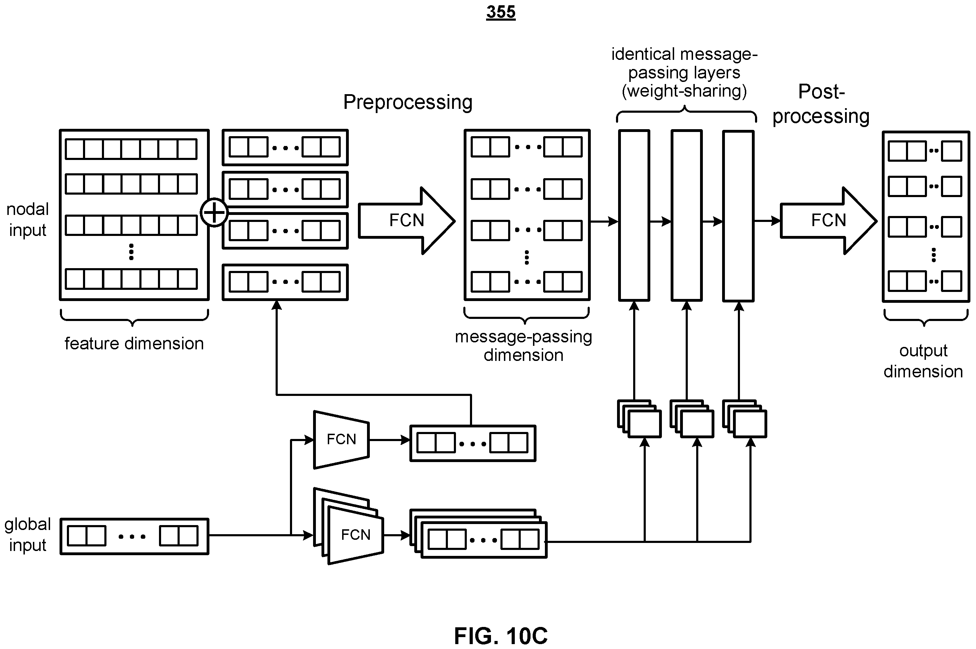

FIG. 10C illustrates an example architecture of a message-passing neural network, according to an embodiment of machine-learning model 355. In this example, three identical serially arranged message-passing layers are implemented, using weight-sharing. It should be understood that each message-passing layer may comprise the encoder-decoder sequence illustrated in FIG. 10B, which may potentially comprise a plurality of parallel message-passing layers as illustrated in FIG. 10B.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method of facilitating stability in a power network, the method comprising using at least one hardware processor to, for each of one or more operating points for the power network, perform a dynamic security assessment by:
applying a machine-learning model to the operating point to determine a value of a security indicator representing stability in the power network, wherein the value of the security indicator is a numerical value within a numerical range in which a first end of the numerical range represents instability and a second end of the numerical range represents stability; and
determining whether or not the power network is stable for the operating point based on the determined value of the security indicator.

2. The method of Claim 1, wherein determining whether or not the power network is stable comprises:
determining that the power network is stable when the determined value of the security indicator satisfies a threshold; and
determining that the power network is not stable when the determined value of the security indicator does not satisfy the threshold.

3. The method of any one of the preceding claims, further comprising using the at least one hardware processor to determine a proximity of the power network to instability based on the determined value of the security indicator, and preferably
wherein determining the proximity of the power network to instability comprises calculating a difference between the determined value of the security indicator and a threshold.

4. The method of any one of the preceding claims, wherein the one or more operating points are a plurality of consecutive operating points, and wherein the method further comprises using the at least one hardware processor to, when determining that the power network is stable, determine a speed at which the power network is approaching instability based on the determined values of the security indicator from the dynamic security assessments for the plurality of consecutive operating points, and preferably
wherein determining the speed at which the power network is approaching instability comprises calculating a rate of change between the determined values of the security indicator from at least two of the dynamic security assessments for the plurality of consecutive operating points.

5. The method of any one of the preceding claims, wherein the one or more operating points comprise at least one forecasted operating point for a future time point, such that the determined value of the security indicator from the dynamic security assessment for that at least one forecasted operating point is a predicted value of the security indicator at the future time point, and/or
wherein the one or more operating points are a plurality of operating points, wherein the plurality of operating points comprises two or more past operating points for respective past time points, and wherein the method further comprises using the at least one hardware processor to predict a value of the security indicator for at least one future time point based on a time series of the determined values of the security indicator from the dynamic security assessments for the two or more past operating points.

6. The method of any one of the preceding claims, wherein the one or more operating points are a plurality of operating points, wherein the plurality of operating points comprises two or more past operating points for respective past time points and at least one forecasted operating point for a future time point, and wherein the method further comprises using the at least one hardware processor to:
predict an intermediate value of the security indicator for the future time point based on a time series of the determined values of the security indicator from the dynamic security assessments for the two or more past operating points; and
determine a final value of the security indicator for the future time point based on the predicted value of the security indicator for the future time point and the determined value of the security indicator from the dynamic security assessment for the at least one forecasted operating point.

7. The method of any one of the preceding claims, wherein applying the machine-learning model to the operating point to determine the value of the security indicator comprises:
executing the machine-learning model to output a bus-specific value of the security indicator for each of a plurality of buses in the power network; and
determining a global value of the security indicator, as the determined value of the security indicator, based on the bus-specific values of the security indicator.

8. The method of Claim 7, wherein the plurality of buses includes every bus in the power network, and/or
at least one of the plurality of buses is not connected to any synchronous machine.

9. The method of any one of the preceding claims, wherein applying the machine-learning model to the operating point to determine the value of the security indicator comprises:
executing the machine-learning model to output a contingency-specific value of the security indicator for each of a plurality of contingencies; and
determining a global value of the security indicator based on the contingency-specific values of the security indicator.

10. The method of any one of the preceding claims, wherein applying the machine-learning model to the operating point to determine the value of the security indicator comprises:
executing the machine-learning model to output a bus-and-contingency-specific value of the security indicator for each of a plurality of buses in the power network and for each of a plurality of contingencies; and
determining a global value of the security indicator based on the bus-and-contingency-specific values of the security indicator, and/or
further comprising using the at least one hardware processor to, when the dynamic security assessment for at least one of the one or more operating points determines that the power network is unstable for the at least one operating point, control one or more components of the power network to mitigate instability in the power network.

11. The method of Claim 10, wherein controlling one or more components of the power network to mitigate instability in the power network comprises one or more of shedding one or more loads, re-dispatching one or more power generators, tripping one or more power generators, reconfiguring a topology of the power network, or adjusting one or more setpoints of the one or more components, and/or
wherein the one or more components comprise a special protection system (SPS).

12. The method of any one of the preceding claims, wherein the machine-learning model comprises a message-passing neural network, and wherein each of the plurality of training records comprises a nodal tensor that has a nodal dimension, representing a plurality of buses in the power network, and a feature dimension, representing the value of each of the one or more parameters at each of the plurality of buses.

13. A system comprising:
at least one hardware processor; and
software configured to, when executed by the at least one hardware processor, perform the method of any one of the preceding claims.

14. A computer program comprising instructions that, when executed by a computer, cause the computer to perform the method of any one of Claims 1 through 12.

15. A non-transitory computer-readable medium having instructions stored thereon, wherein the instructions, when executed by a processor, cause the processor to perform the method of any one of Claims 1 through 12.
